# EUROPEAN PATENT APPLICATION

(11) **EP 4 787 828 A1**
(43) Date of publication of application: **05.08.2026**
(21) Application number: 24871880.1
(22) Date of filing: 12.09.2024
(51) Int. Cl.: H04N 1/387, H04N 1/00

(54) **IMAGE PROCESSING DEVICE**

(30) Priority: 26.09.2023 JP 2023162878; 26.09.2023 JP 2023162879
(71) Applicant: KYOCERA Document Solutions Inc., Osaka-shi, Osaka 540-8585 (JP)
(72) Inventor: TANAKA Kazunori, Osaka-shi, Osaka 540-8585 (JP); SATO Koji, Osaka-shi, Osaka 540-8585 (JP); OKUI Ryota, Osaka-shi, Osaka 540-8585 (JP); HAYASHI Issei, Osaka-shi, Osaka 540-8585 (JP); TAJIMA Shinichi, Osaka-shi, Osaka 540-8585 (JP); MIYAJI Naoya, Osaka-shi, Osaka 540-8585 (JP); OKAZAKI Yuya, Osaka-shi, Osaka 540-8585 (JP); MURASHIMA Takanori, Osaka-shi, Osaka 540-8585 (JP)
(74) Representative: Winter, Brandl - Partnerschaft mbB
(86) International application number: PCT/JP2024/032647
(87) International publication number: WO 2025/070083

(57) **Abstract**

The target image acquiring unit 11 acquires a document image of a document, the additional object detecting unit 12 detects additional objects additionally described to the document, and the process type determining unit 13 determines a process type corresponding to an additionally-written command included in the detected additional objects among predetermined plural process types. The process executing unit 14 uses this image processing apparatus or an external server and thereby executes a process of the determined process type for a process target area determined on the basis of the detected additional objects.

## Description

### Technical Field

The present invention relates to an image processing apparatus.

### Background Art

Regarding a document image obtained by scanning a document that includes a process list of process items "Delete", "Acquire" and "Restrict", an image processing apparatus determines a process item specified with a specific color in the process list, and performs the specified process item for a part surrounded by the specific color or a part filled in with the specific color in the document image (see PATENT LITERATURE #1, for example).

### Citation list

### Patent literature

PATENT LITERATURE #1: Japan Patent Application Publication No. 2009-27243.

### Summary of invention

However, in the aforementioned image processing apparatus, the aforementioned process list is required to have been included in a document as a process target. A user is required to include the process list in the document when making the document or to additionally print the process list on the document after making the document. If the process list is included in the document when making the document, it is not favorable because an object that does not relate to contents of the original document is printed in the document. Further, if the process list is additionally printed on the document after making the document, it is required to perform this printing and thereafter specify a process with a marker, and therefore a user is required some burden and it is not realistic.

The present invention has been conceived in view of the aforementioned problem, and it is an object of the present invention to obtain an image processing apparatus that a user causes to execute a desired process for a desired part in a document by an intuitive operation even though information on a process is not included when the document is generated as a process target.

An image processing apparatus according to the present invention includes: a target image acquiring unit that acquires a document image of a document; an additional object detecting unit that detects additional objects additionally described to the document; a process type determining unit that determines a process type corresponding to an additionally-written command included in the detected additional objects among predetermined plural process types; and a process executing unit that uses this image processing apparatus or an external server and thereby executes a process of the determined process type for a process target area determined on the basis of the detected additional objects.

### Advantageous effect of invention

By means of the present invention, obtained is an image processing apparatus that a user can cause to execute a desired process for a desired part in a document by an intuitive operation even though information on a process is not included when the document is generated as a process target.

These and other objects, features and advantages of the present invention will become more apparent upon reading of the following detailed description along with the accompanied drawings.

### Brief description of drawings

[Fig. 1] Fig. 1 shows a block diagram that indicates a configuration of an image processing apparatus according to Embodiment 1 of the present invention.
[Fig. 2] Fig. 2 shows a diagram that indicates an example of a document and an example of an additionally-written command and an ROI command as additional objects additionally described to the document.
[Fig. 3] Fig. 3 shows a diagram that explains association between a detected additionally-written command and a detected ROI command.
[Fig. 4] Fig. 4 shows a diagram that indicates an example of a process type and an additionally-written command.
[Fig. 5] Fig. 5 shows a flowchart that explains a behavior of the image processing apparatus shown in Fig. 1.
[Fig. 6] Fig. 6 shows a block diagram that indicates a configuration of an image processing apparatus according to Embodiment 2 of the present invention.
[Fig. 7] Fig. 7 shows a diagram that indicates an example of a relationship between an additionally-written command and a process type.
[Fig. 8] Fig. 8 shows a diagram that indicates an example and a command registration screen.
[Fig. 9] Fig. 9 shows a diagram that indicates an example of a process management screen.
[Fig. 10] Fig. 10 shows a diagram that indicates an example of a writing-tool-characteristic registration screen.
[Fig. 11] Fig. 11 shows a diagram that indicates an example of a writing tool calibration sheet.
[Fig. 12] Fig. 12 shows a diagram that indicates examples of dialogs displayed in accordance with an application program 2b.

### Description of embodiments

Hereinafter, embodiments according to aspects of the present invention will be explained with reference to a drawing.

### Embodiment 1.

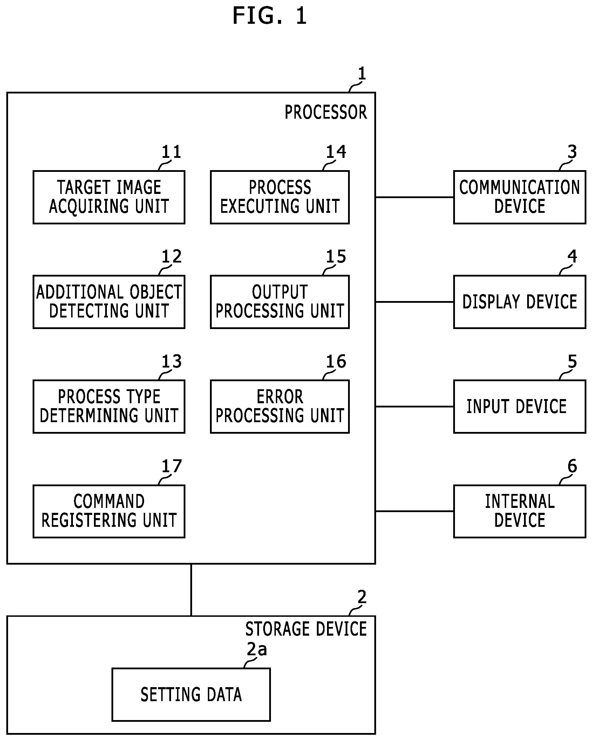

Fig. 1 shows a block diagram that indicates a configuration of an image processing apparatus according to an embodiment of the present invention. An image processing apparatus shown in Fig. 1 is an information processing apparatus such as personal computer, or an electronic apparatus such as digital camera or image forming apparatus (scanner, multi function peripheral or the like), and includes a processor 1, a storage device 2, a communication device 3, a display device 4, an input device 5, an internal device 6 and the like.

The processor 1 includes a computer and executes a program with the computer and thereby, acts as sorts of processing units. Specifically, the computer includes a CPU (Central Processing Unit), a ROM (Read Only Memory), a RAM (Random Access Memory) and the like, loads a program stored in the ROM or the storage device 2, executes the program with the CPU, and thereby acts as sorts of processing units. Further, the processor 1 may include an ASIC (Application Specific Integrated Circuit) that acts as a specific processing unit.

The storage device 2 is a non-volatile storage device such as flash memory, and stores a program and data required for a process mentioned below. In the storage device 2, setting data 2a is stored. The setting data 2 includes a parameter of a learner mentioned below and a relationship between an additionally-written command and a command type, and the like.

The communication device 3 is a device that performs data communication with an external device, such as network interface or a peripheral device interface. The display device 4 is a device that displays sorts of information to a user, such as a display panel of a liquid crystal display. The input device 5 is a device that detects a user operation, such as keyboard or touch panel.

The internal device 6 is a device that performs a specific function of this image processing apparatus. For example, if this image processing apparatus is an image forming apparatus, the internal device 6 includes an image scanning device that optically scans a document image from a document, a printing device that prints an image on a print sheet, and/or the like.

Here, the processor 1 acts as a target image acquiring unit 11, an additional object detecting unit 12, a process type determining unit 13, a process executing unit 14, an output processing unit 15, an error processing unit 16, and a command registering unit 17 as the aforementioned processing units.

The target image acquiring unit 11 acquires a document image (i.e. image data of it) of a document from the storage device 2, the communication device 3, the internal device 6 or the like, and stores the document image into the RAM or the like. For example, this document is a print product outputted by a printing device, and this document image is an image obtained by scanning such document using an image scanning device. For example, this document is a business form.

The additional object detecting unit 12 detects additional objects additionally described to the aforementioned document.

The additional object detecting unit 12 may detect additional objects additionally described to the aforementioned document in the document image that includes the aforementioned additional objects or may detect additional objects additionally described to the aforementioned document in a difference image between the document image that includes the aforementioned additional objects and an original document image that does not include the aforementioned additional objects. Further, if an original document image is a monochrome image and additional objects are added by handwriting with a color writing tool such as a pen, the additional objects may be detected by extracting parts with a writing color (chromatic color) of the writing tool from the document image that includes the aforementioned additional objects. For example, the writing color is specified as coordinate values with an HSV color space.

The process type determining unit 13 determines a process type corresponding to an additionally-written command included in the detected additional objects among predetermined plural process types.

Here, the additionally-written command is image information rather than character information, and image information of at least one of character, symbol and figure.

In this embodiment, the additional object detecting unit 12 and the process type determining unit 13 perform the detection of the additional objects and the determination of the process type by object detection using a learner that machine learning has been performed. This learner is a deep-learning neural network built in this image processing apparatus or the like, and for example, machine learning has been performed for the learner in accordance with an existing machine learning method such that lots of document images in which additionally-written commands and ROI (Region Of Interest) commands have been added are used as input data, classes of the additionally-written commands and the ROI commands are used as output data.

Thus, for extracting the additionally-written command, an OCR (Optical Character Recognition) process is not executed for the additional objects detected by the additional object detecting unit 12, and the additional objects are directly classified into the additionally-written command on the basis of image information (image characteristic amount) of the additional objects.

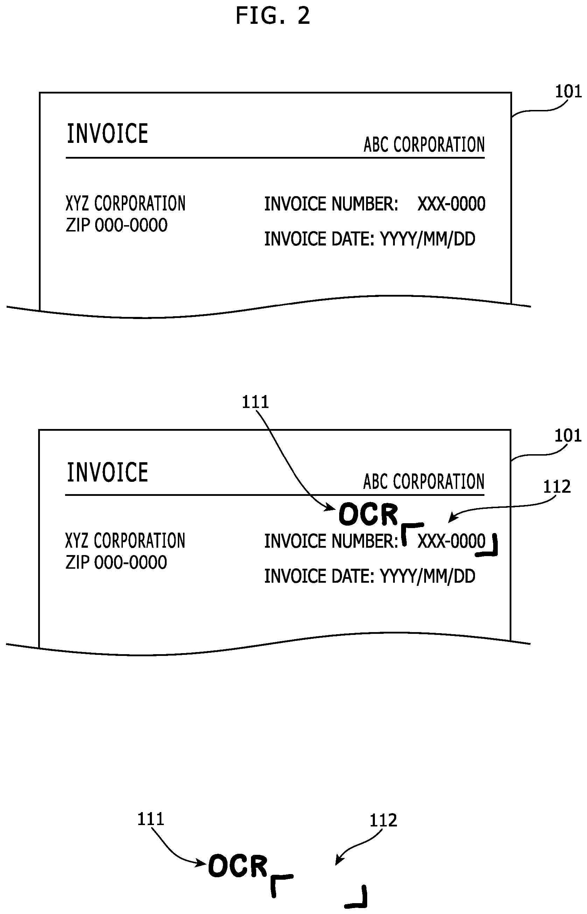

Fig. 2 shows a diagram that indicates an example of a document and an example of an additionally-written command and an ROI command as additional objects additionally described to the document.

For example, an additionally-written command 111 and an ROI command 112 are additionally written to a document 101 as shown in Fig. 2. For example, this additional writing is performed by handwriting with a writing tool such as marker of a predetermined color.

The additionally-written command 111 shown in Fig. 2 is "OCR" as characters. Further, the ROI command 112 shown in Fig. 2 is a pair of square brackets, and specifies a process target area for a process specified by the additionally-written command 111.

In the detection of the aforementioned additional objects, bounding boxes (circumscribed rectangles) 121 and 122 of the additional objects are detected; and in the determination of the aforementioned process type, an additional object that has a specific image characteristic is recognized as the additionally-written command 111, and an additional object that has a specific image characteristic is recognized as the ROI command 112 (a pair of an image that indicates a top left corner of a process target area and an image that indicates a bottom right corner of the process target area).

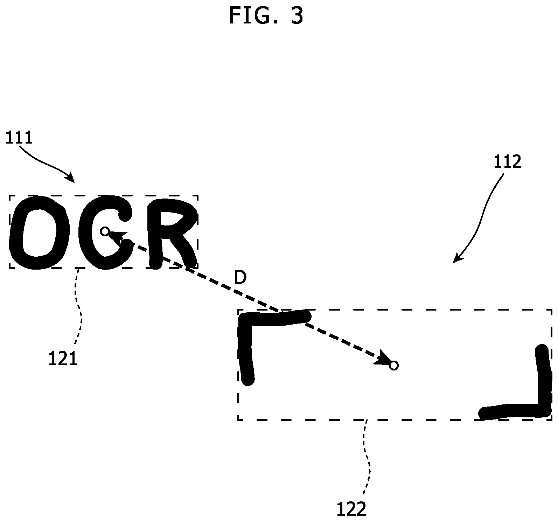

Fig. 3 shows a diagram that explains association between a detected additionally-written command and a detected ROI command. Further, as shown in Fig. 3 for example, the bounding box 122 of the ROI command 112 is set as a process target area, and the additionally-written command 111 and the process target area are associated with each other on the basis of a distance D between a centroid position of the bounding box 122 (process target area) and a centroid position of the bounding box 121 of the additionally-written command 111. Therefore, a process specified by the additionally-written command 111 is executed for this process target area. For example, if the distance D is equal to or less than a predetermined value, then the additionally-written command 111 and the process target area are associated with each other.

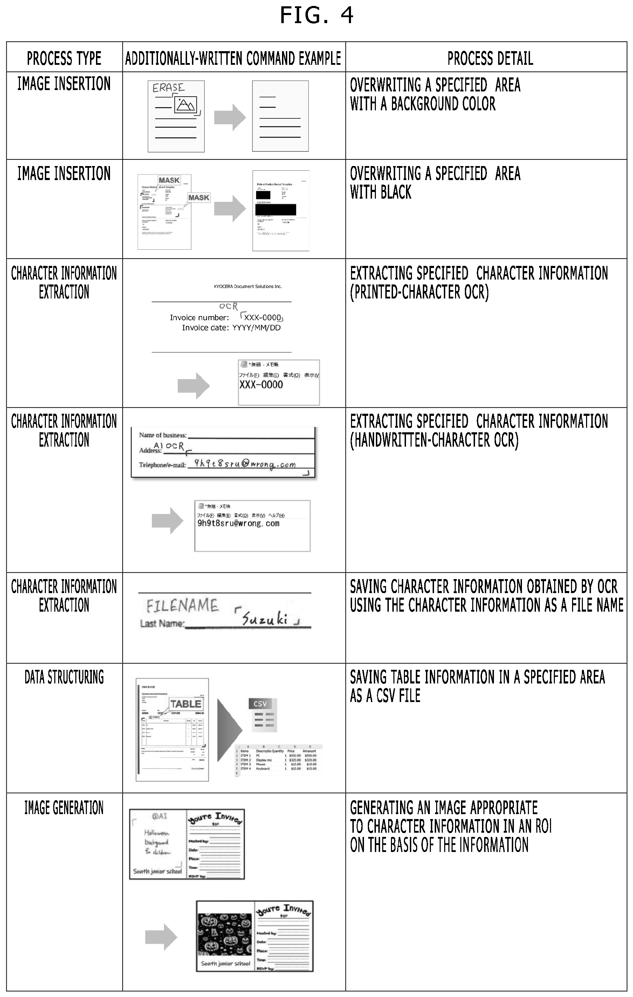

Fig. 4 shows a diagram that indicates an example of a process type and an additionally-written command. In this embodiment, as shown in Fig. 4 for example, plural process types that can be specified by plural additionally-written commands different from each other are set in the setting data 2a.

As the plural process types, there are image insertion, character information extraction, data structuring, image generation and the like.

As shown in Fig. 4 for example, in the process type "image insertion" corresponding to the additionally-written command "ERASE", executed is a process to overwrite a process target area with a background color (i.e. deletion of an object in a process target area).

As shown in Fig. 4 for example, in the process type "image insertion" corresponding to the additionally-written command "MASK", executed is a process to overwrite a process target area with a specific color (black or the like) (i.e. mask process).

As shown in Fig. 4 for example, in the process type "character information extraction" corresponding to the additionally-written command "OCR", an OCR process for a printed character is executed for an image of a process target area.

As shown in Fig. 4 for example, in the process type "character information extraction" corresponding to the additionally-written command "AIOCR", an OCR process for handwritten character is executed for an image of a process target area.

As shown in Fig. 4 for example, in the process type "character information extraction" corresponding to the additionally-written command "FILENAME", executed is a process to set as a file name character information (text data) obtained in an OCR process for an image of a process target area and save image data of a document with the file name.

As shown in Fig. 4 for example, in the process type "data structuring" corresponding to the additionally-written command "TABLE", executed is a process to execute table extraction for an image of a process target area and save data in the extracted table as a CSV data or the like.

As shown in Fig. 4 for example, in the process type "image generation" corresponding to the additionally-written command "@AI", executed is a process to generate an image appropriate to character information (text data) obtained in an OCR process for an image of a process target area using a diffusion model or the like and fit the generated image into the process target area.

The process executing unit 14 uses this image processing apparatus or an external server and thereby executes a process of the determined process type for a process target area determined on the basis of the detected additional objects. If this process is executed using an external server, the process executing unit 14 transmits a process request and data required for the process to the external server using the communication device 3, and receives a process result from the external server using the communication device 3.

In this embodiment, the process executing unit 14 selects on the basis of the determined process type either to execute the process using this image processing apparatus or to execute the process using the external server. Specifically, for a high-load process, the process executing unit 14 causes the external server to execute the process; and for a low-load process, the process executing unit 14 executes the process with this image processing apparatus without using the external server.

For example, if the determined process type is any of the aforementioned image insertion, the OCR process for a printed character and the data structuring, then the process executing unit 14 selects to execute the aforementioned process using this image processing apparatus.

Further, for example, if the determined process type is any of the aforementioned image generation and the OCR process for a handwritten character, then the process executing unit 14 selects to execute the aforementioned process using the external server.

The output processing unit 15 performs outputting the aforementioned processed document image (printing, data transmission or the like), outputting the data obtained by the aforementioned process, displaying a result of the aforementioned process on the display device 4 or the like.

If an error occurs in the aforementioned detection of the additional objects and the determination of the process type, then the error processing unit 16 determines a cause and/or an error type of the error and displays the cause and/or the error type on the display device 4.

The command registering unit 17 performs registration of a user-desired additionally-written command and the like.

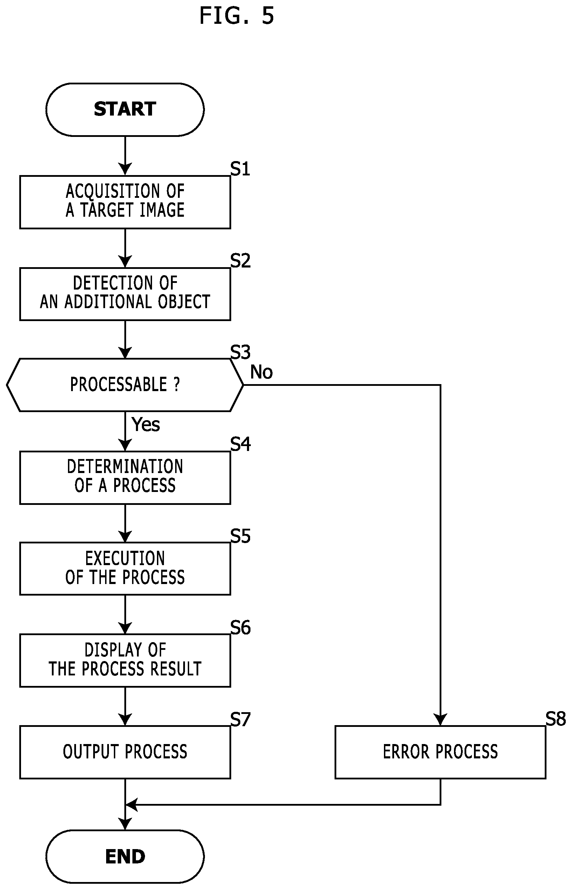

The following part explains a behavior of the image processing apparatus in Fig. 1. Fig. 5 shows a flowchart that explains a behavior of the image processing apparatus shown in Fig. 1.

When the target image acquiring unit 11 acquires a document image (an additionally-written command and an ROI command have been described) (in Step S1); the additional object detecting unit 12 detects additional objects additionally described on the aforementioned document (in Step S2); and the process type determining unit 13 determines a process target area, tries to classify the additional object into an additionally-written command, and determines whether an additionally-written command is determined or not (i.e. whether a process specified by an additionally-written command can be executed or not) (in Step S3).

If an additionally-written command is determined, the process type determining unit 13 determines a process type and a process corresponding to the additionally-written command (in Step S4), and the process executing unit 14 executes the process of the process type corresponding to the additionally-written command for the process target area determined on the basis of the detected additional objects as mentioned (in Step S5).

Further, the process executing unit 14 displays the process result on the display device 4 (in Step S6) and performs an output process (printing, data transmission, data saving and/or the like) of the processed document image and/or the generated data (in Step S7).

Contrarily, if in Step S3 the detection of the additional objects or the determination of the additionally-written command is failed, the error processing unit 16 performs error analysis and displays a cause, an error type and/or the like of the error (in Step S8).

As mentioned, in the aforementioned Embodiment 1, the target image acquiring unit 11 acquires a document image of a document, the additional object detecting unit 12 detects additional objects additionally described to the document, and the process type determining unit 13 determines a process type corresponding to an additionally-written command included in the detected additional objects among predetermined plural process types. The process executing unit 14 uses this image processing apparatus or an external server and thereby executes a process of the determined process type for a process target area determined on the basis of the detected additional objects.

Consequently, a user can cause to execute a desired process for a desired part in a document by an intuitive operation even though information on a process is not included when the document is generated as a process target.

### Embodiment 2.

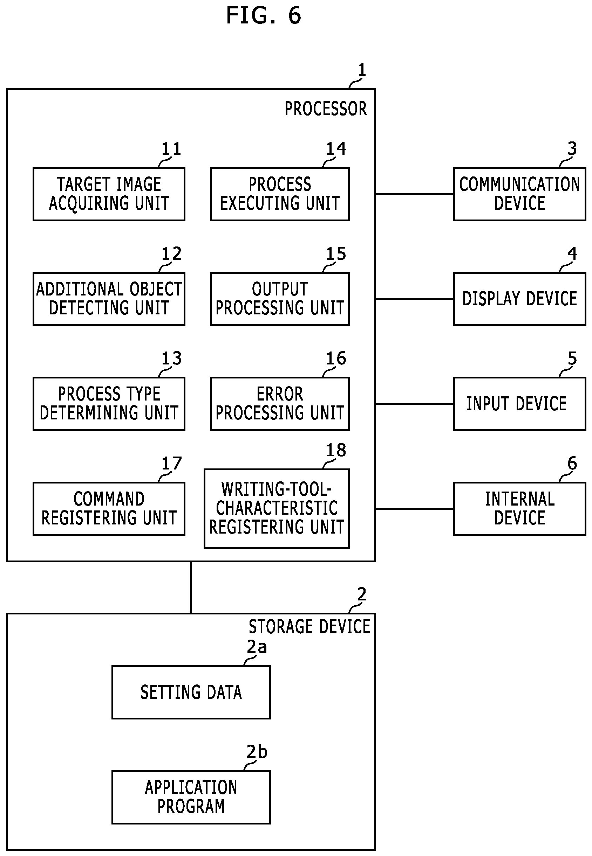

Fig. 6 shows a block diagram that indicates a configuration of an image processing apparatus according to Embodiment 2 of the present invention. In Embodiment 2, in the storage device 2, the setting data 2a and an application program 2b are stored. Further, in Embodiment 2, the processor 1 acts as the target image acquiring unit 11, the additional object detecting unit 12, the process type determining unit 13, the process executing unit 14, the output processing unit 15, the error processing unit 16, the command registering unit 17, and a writing-tool-characteristic registering unit 18 as the aforementioned processing units.

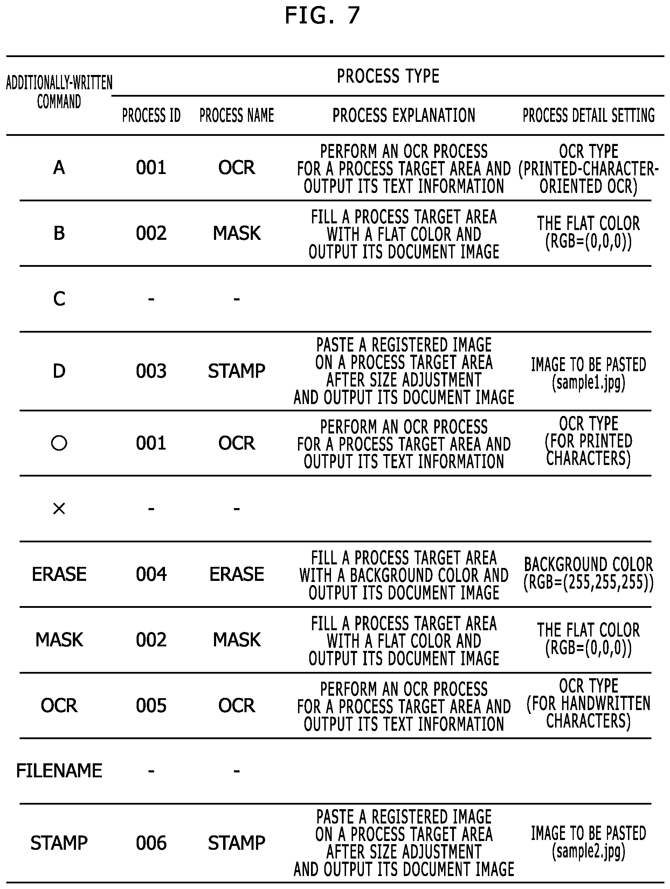

Fig. 7 shows a diagram that indicates an example of a relationship between an additionally-written command and a process type. For example, as shown in Fig. 7, a relationship between an additionally-written command and a process type is set. In Embodiment 2, as shown in Fig. 7 for example, plural process types that can be specified by plural additionally-written commands different from each other are set in the setting data 2a. As the plural process types, there are image insertion, character information extraction, data structuring, image generation and the like as mentioned.

In Embodiment 2, the command registering unit 17 adds data that indicates such a relationship in the setting data 2a. The command registering unit 17 registers a relationship specified by a user, and the process type determining unit 13 determines the process type corresponding to the additionally-written command in accordance with the registered relationship. Thus, a user can assign an arbitrary process type to an existing additionally-written command. The command registering unit 17 performs the registration of the relationship at another timing than the processes performed by the target image acquiring unit 11, the additional object detecting unit 12, the process type determining unit 13, the process executing unit 14, the output processing unit 15, the error processing unit 16 and the like for the aforementioned document image.

Specifically, as shown in Fig. 7 for example, a unique command ID is assigned to each additionally-written command (image information), and a unique process ID is assigned to a process type, and the command ID and the process ID are editably associated with each other. For example, for the aforementioned object detection, a pair of the additionally-written command (image information) and the command ID is set as training data of the learner of the object detection, and machine learning for the learner has been performed.
The command registering unit 17 may register the aforementioned relationship without setting any of the aforementioned plural process types to the additionally-written command such as the additionally-written commands "C", "×" and "FILENAME" in Fig. 7, for example. In such a case, even if an unintentional additional object is misrecognized as such an additionally-written command, an unintentional process is not executed.

Further, the command registering unit 17 may register the aforementioned relationship without specifying any of the additionally-written commands to a process type among the aforementioned plural process types.

Furthermore, the command registering unit 17 may register the relationship that specifies a single process type to plural additionally-written commands such as the process types OCR, MASK or STAMP in Fig. 7, for example.

Furthermore, as shown in Fig. 7 for example, a detail setting is set to the process type if required and the detail setting is editable.

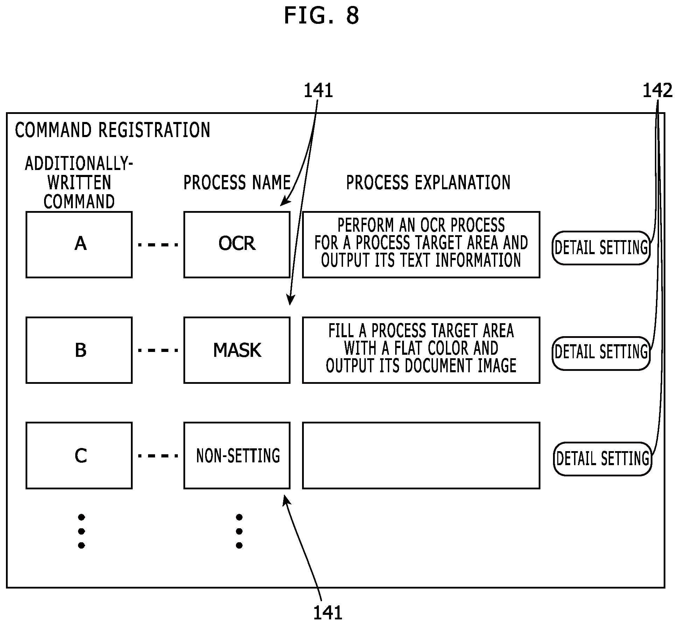

Fig. 8 shows a diagram that indicates an example and a command registration screen. The command registering unit 17 displays a command registration screen on the display device 4 as shown in Fig. 8 for example, and sets a process type (process name) 141 corresponding to an available additionally-written command in accordance with a user operation to the input device 5. Further, in the command registration screen, a detail setting key 142 is arranged for each process type, and when the detail setting key 142 is pressed down by a user operation to the input device 5, a setting screen (not shown) of the detail setting is displayed and input (specifying) of the detail setting is performed by a user.

Further, in this embodiment, in accordance with a user operation, the command registering unit 17 installs a processing program of a new process type different from the plural process types and adds the new process type to the plural process types. Further, the command registering unit 17 uninstalls a processing program of a process type among the plural process types and deletes this process type from the plural process types.

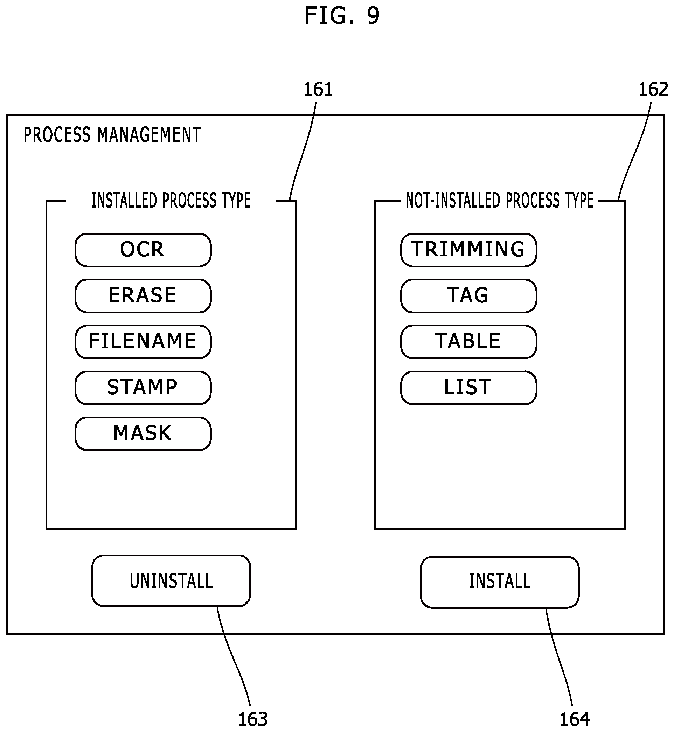

Fig. 9 shows a diagram that indicates an example of a process management screen. The command registering unit 17 displays a process management screen as shown in Fig. 9 for example, on the display device 4. In the process management screen, an installed process type list 161, a not-installed process type list 162, an uninstall key 163, and an install key 164 are included.

The command registering unit 17 determines an installed process type selected from the installed process type list 161 in accordance with a user operation to the input device 5, and when the uninstall key 163 is pressed down, performs uninstalling of the selected installed process type.

Similarly, the command registering unit 17 determines a not-installed process type selected from the not-installed process type list 162 in accordance with a user operation to the input device 5, and when the install key 164 is pressed down, performs installing of the selected not-installed process type. For example, the command registering unit 17 downloads and installs a processing program of the selected process type from a predetermined server using the communication device 3 or extracts and installs a processing program of the selected process type from package data that has been installed. The not-installed process type list 162 shown in Fig. 9 includes the process types TRIMMING, TAG, TABLE and LIST. Here, a process of the process type TRIMMING is a process to trim an image of a process target area or the like to a specified size. Further, a process of the process type TAG is a process to generate a string (character information) included in a process target area using an OCR process and set the character information as a searching tag when a document image is data in a PDF format. A process of the process type TABLE is a process to convert an image of a process target area into table data. A process of the process type LIST is a process to extract images of plural process target areas and merge the images into a single image.

The writing-tool-characteristic registering unit 18 registers characteristic data of a writing tool (pencil, pen such as ballpoint pen, marker or the like) used for describing the additionally-written command to the document by handwriting. In other words, a user can use a user-desired writing tool to describe the additionally-written command. Further, the additional object detecting unit 12 detects handwritten additional objects on the basis of the registered characteristic data, and the process type determining unit 13 determines a process type corresponding to an additionally-written command included in the detected handwritten additional objects.

Here, the characteristic data is writing color information, writing width information and/or the like of the writing tool. The writing color information is expressed in a specific color space (RGB, HSV or the like). Using the writing color information and/or the writing width information as the characteristic data, the additionally-written command and the ROI command are correctly detected. In particular, using the writing width information, even if a color specified by the writing color information exists in the document (photograph or the like), the additionally-written command and the ROI command are correctly detected.

For example, if the original document image is a monochrome image, a part with the writing color (color range of chromatic color or achromatic color) registered as the characteristic data (writing color information) is extracted from a document image that includes the aforementioned additional objects, and thereby the additional objects are detected. Here, the writing color may be a single color or may be plural colors.

Further, for example, a part with the writing width (single width or width range) registered as the characteristic data (writing width information) is extracted from a document image that includes the aforementioned additional objects, and thereby the additional objects are detected.

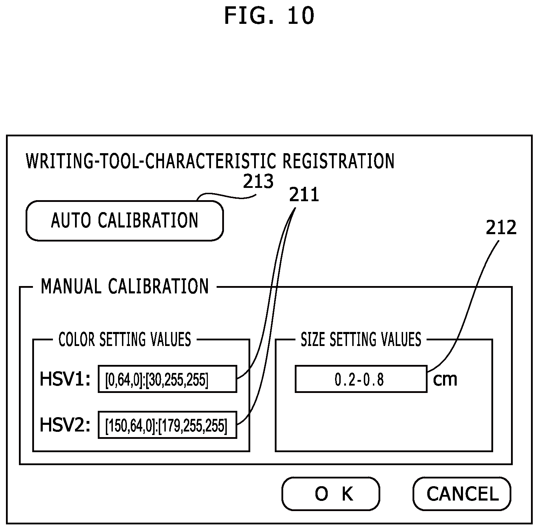

Fig. 10 shows a diagram that indicates an example of a writing-tool-characteristic registration screen. The writing-tool-characteristic registering unit 18 displays a writing-tool-characteristic registration screen as shown in Fig. 10 for example, on the display device 4. In the writing-tool-characteristic registration screen, an input field 211 of a writing color and an input field 212 of a writing width are included for manual calibration, and an automatic calibration key 213 is included.

In case of the manual calibration, a user inputs a writing color to the input field 211 and inputs a writing width to the input field 212 using the input device 5, and the writing-tool-characteristic registering unit 18 determines the writing color inputted to the input field 211 and determines the writing width inputted to the input field 212, and registers the writing color and the writing width as the characteristic data into the setting data 2a.

For example, in a case shown in Fig. 10, as the writing color, a first color range (0≤H≤30 and 64≤S≤255 and 0≤V≤255) and a second color range (150≤H≤179 and 64≤S≤255 and 0≤V≤255) are set in an HSV color space. Further, in a case shown in Fig. 10, for example, as the writing width, a width range of 0.2 cm to 0.8 cm is set. For example, a unit of the writing width is converted to pixel on the basis of a resolution (dpi), and then the writing width is used.

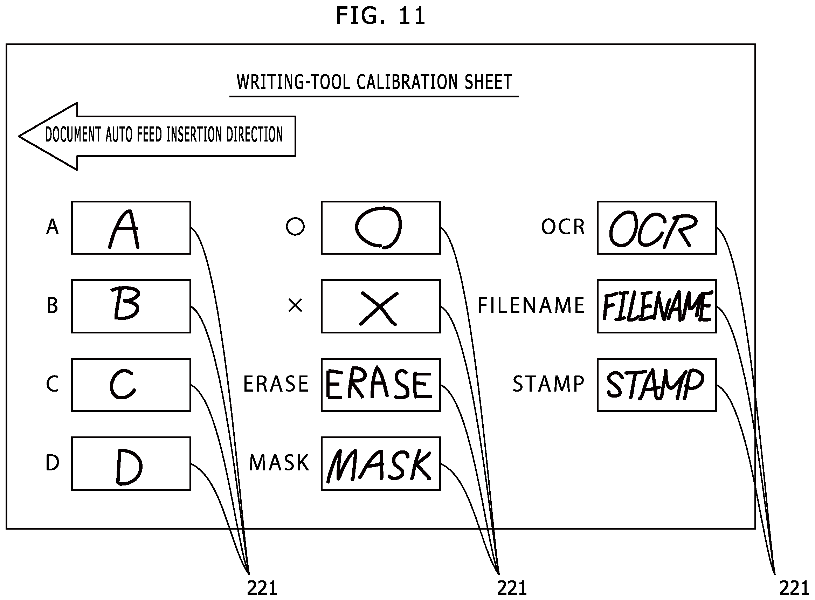

In case of the automatic calibration, when the automatic calibration key 213 is pressed down by a user using the input device 5, the writing-tool-characteristic registering unit 18 prints a writing tool calibration sheet using a printing device in the internal device 6. Further, a user uses a writing tool that the user wants to register characteristic data of and fills in the writing tool calibration sheet by handwriting. Fig. 11 shows a diagram that indicates an example of a writing tool calibration sheet. As shown in Fig. 11 for example, in the writing tool calibration sheet, a fill-in field 221 for an additionally-written command is arranged.

Afterward, the writing-tool-characteristic registering unit 18 scans an image of the writing tool calibration sheet in which the additionally-written command has been written (to the fill-in field 221) using an image scanning device in the internal device 6 in accordance with a user operation to the input device 5, and determines characteristic data (writing color, writing width and/or the like) from an image of the additionally-written command written by handwriting in the image of the writing tool calibration sheet (in the fill-in field 221).

Further, in this embodiment, as mentioned, the command registering unit 17 and the writing-tool-characteristic registering unit 18 are embodied by executing a predetermined application program 2b with the aforementioned computer, and switches between a dialog to input the aforementioned relationship and a dialog to input the aforementioned characteristic of the writing tool and displays each of the dialogs on the predetermined display device 4 in accordance with the application program 2b.

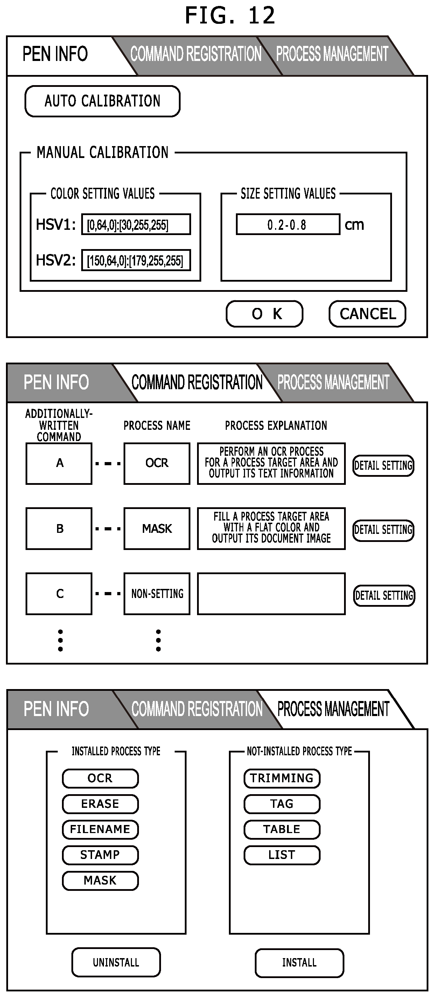

Fig. 12 shows a diagram that indicates examples of dialogs displayed in accordance with an application program 2b. When the application program 2b is executed, a setting screen as shown in Fig. 12 for example is displayed on the display device 4. As shown in Fig. 12 for example, this setting screen includes plural (here, three) tabs, and a dialog for writing tool characteristic registration (pen info), a dialog for command registration, and a dialog for process management corresponding to the three tabs are displayed in a switching manner. The dialog for writing tool characteristic registration (pen info) is the same as that in Fig. 10, the dialog for command registration is the same as that in Fig. 8, and the dialog for process management is the same as that in Fig. 9.

The following part explains a behavior of the image processing apparatus in Embodiment 2.

### (a) Command registration and writing-tool-characteristic registration

In advance, a user performs registration of a new process type and/or change of a process type corresponding to an additionally-written command and performs registration of characteristic data of a writing tool.

The command registering unit 17 displays the screen as shown in Fig. 8 or 12 on the display device 4 in accordance with a user operation, determines a relationship between an additionally-written command and a process type that are inputted by a user as mentioned, and registers the relationship into the setting data 2a.

Further, the command registering unit 17 displays the screen as shown in Fig. 10 or 12 on the display device 4 in accordance with a user operation, determines characteristic data of a writing tool that is inputted by a user as mentioned, and registers the characteristic data into the setting data 2a.

### (b) Processing a document image

After the process type corresponding to the additionally-written command is set and the characteristic data of a writing tool is registered as mentioned, a process for a user document image is performed as well as in Embodiment 1. At that time, the additional object detecting unit 12 detects additional objects additionally described to the aforementioned document on the basis of the registered characteristic data (in Step S2).

Other parts of the configuration and behaviors of the image processing apparatus in Embodiment 2 are identical or similar to those in Embodiment 1, and therefore not explained here.

Further, it should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

### Industrial applicability

For example, the present invention is applicable to an image processing apparatus that performs a user-desired process for a document image.

## Claims

1. An image processing apparatus, comprising:
a target image acquiring unit that acquires a document image of a document;
an additional object detecting unit that detects additional objects additionally described to the document;
a process type determining unit that determines a process type corresponding to an additionally-written command included in the detected additional objects among predetermined plural process types; and
a process executing unit that uses this image processing apparatus or an external server and thereby executes a process of the determined process type for a process target area determined on the basis of the detected additional objects.

2. The image processing apparatus according to claim 1, wherein the additionally-written command is image information rather than character information.

3. The image processing apparatus according to claim 2, wherein the additionally-written command is image information of at least one of character, symbol and figure.

4. The image processing apparatus according to claim 2, wherein the additional object detecting unit and the process type determining unit perform the detection of the additional objects and the determination of the process type by object detection using a learner that machine learning has been performed.

5. The image processing apparatus according to claim 1, wherein the process executing unit selects on the basis of the determined process type either to execute the process using this image processing apparatus or to execute the process using the external server.

6. The image processing apparatus according to claim 5, wherein if the determined process type is any of image insertion, OCR process for a printed character and data structuring, the process executing unit executes the process using this image processing apparatus.

7. The image processing apparatus according to claim 5, wherein if the determined process type is any of image generation and OCR process for a handwritten character, the process executing unit executes the process using the external server.

8. The image processing apparatus according to claim 1, further comprising a command registering unit that registers a relationship between the additionally-written command and the process type;
wherein the command registering unit registers the relationship specified by a user; and
the process type determining unit determines the process type corresponding to the additionally-written command in accordance with the registered relationship.

9. The image processing apparatus according to claim 8, further comprising a writing-tool-characteristic registering unit that registers characteristic data of a writing tool used for describing the additionally-written command to the document by handwriting;
wherein the additional object detecting unit detects the handwritten additional object on the basis of the registered characteristic data; and
the process type determining unit determines the process type corresponding to the additionally-written command included in the detected handwritten additional object.

10. The image processing apparatus according to claim 9, wherein the characteristic data is writing color information of the writing tool.

11. The image processing apparatus according to claim 9, wherein the characteristic data is writing width information of the writing tool.

12. The image processing apparatus according to claim 8, wherein the command registering unit registers the relationship without specifying any of the plural process types to the additionally-written command.

13. The image processing apparatus according to claim 8, wherein the command registering unit registers the relationship without specifying any of the additionally-written commands to a process type among the plural process types.

14. The image processing apparatus according to claim 8, wherein the command registering unit registers the relationship that specifies a single process type to plural additionally-written commands.

15. The image processing apparatus according to claim 8, wherein the command registering unit installs a processing program of a new process type different from the plural process types and adds the new process type to the plural process types.

16. The image processing apparatus according to claim 8, wherein the command registering unit uninstalls a processing program of a process type among the plural process types and deletes this process type from the plural process types.

17. The image processing apparatus according to claim 9, further comprising a computer;
wherein the command registering unit and the writing-tool-characteristic registering unit are embodied by executing a predetermined application program with the computer; and
the command registering unit and the writing-tool-characteristic registering unit switches between a dialog to input the relationship and a dialog to input a characteristic of the writing tool and displays each of the dialogs on a predetermined display device in accordance with the application program.
